(19) Europäisches Patentamt / European Patent Office / Office européen des brevets

(11) **EP 2 728 740 B1**

(12) **EUROPEAN PATENT SPECIFICATION**

(45) Date of publication and mention
of the grant of the patent:
**21.04.2021 Bulletin 2021/16**

(51) Int Cl.:
***H02P 7/06*** *(2006.01)*      ***H02P 29/60*** *(2016.01)*

(21) Application number: **13158329.6**

(22) Date of filing: **08.03.2013**

(54) **Driving motor for electric vehicles and control method of the same**

Antriebsmotor für elektrische Fahrzeuge und Steuerverfahren damit

Moteur d'entraînement pour véhicules électriques et procédé de commande associé

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.10.2012 KR 20120122505**

(43) Date of publication of application:
**07.05.2014 Bulletin 2014/19**

(73) Proprietor: **LG Electronics Inc.**
**Youngdungpo-gu**
**Seoul 150-721 (KR)**

(72) Inventors:
• **Kim, Youngboong**
**153-801 Seoul (KR)**
• **Lim, Hokyoung**
**153-801 Seoul (KR)**
• **Han, Seungdo**
**153-801 Seoul (KR)**
• **Kim, Yunho**
**153-801 Seoul (KR)**

(74) Representative: **Vossius & Partner**
**Patentanwälte Rechtsanwälte mbB**
**Siebertstrasse 3**
**81675 München (DE)**

(56) References cited:
**US-A1- 2012 242 272**     **US-A1- 2012 249 024**

**Description**

The present disclosure relates to an apparatus that drives an electric vehicle, and more particularly, to a driving motor. Also, the present disclosure relates to a control method of a driving apparatus or a driving motor for electric vehicles.

Generally, a vehicle is driven by an engine. Various carbon-based fuels, such as gasoline and diesel oil, are used to drive the engine. As a result, a large amount of carbon gas is discharged. For this reason, much research has been conducted into an electric vehicle or a hybrid vehicle using a battery to reduce an amount of carbon gas discharged from the vehicle.

An electric vehicle is a vehicle having a motor which is driven by a battery. A hybrid vehicle is a vehicle selectively using an engine or a motor as needed. Consequently, a hybrid vehicle may be regarded as an electric vehicle. This is because the hybrid vehicle includes a driving motor using a battery.

The output performance of an electric vehicle using a motor has a very close relation with the output performance of the motor. That is, the performance of the motor may have an influence upon the performance of the electric vehicle. Consequently, the structure, shape, and size of the motor and a control method of the motor are very important.

US 2012/0242272 A1 discloses a motor control method of increasing the stator current and reducing the rotor current, when a temperature of the rotor is higher than a temperature of the rotor.

Accordingly, the present disclosure is directed to a driving motor for electric vehicles and a control method of the same that substantially obviate one or more problems due to limitations and disadvantages of the related art.

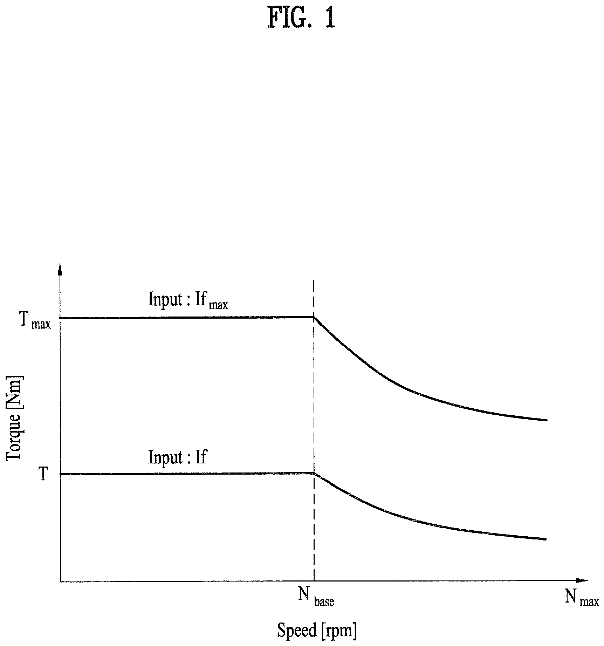

FIG. 1 is a graph showing a relationship between output (torque) and speed (RPM) of a driving motor for general electric vehicles.

As shown in FIG. 1, torque and speed patterns are changed based on a rated speed Nbase. That is, an output torque is uniform until speed is gradually increased to reach the rated speed. At higher than the rated speed, an output torque is decreased as speed is increased. That is, speed is gradually increased to reach a rated speed at a uniform output torque, and an output torque is decreased at higher than the rated speed. Of course, this is based on the premise that the same command torque is input.

If a command torque is uniform, it can be seen that relation patterns between the output (torque) and the speed (RPM) are the same irrespective of a value of the command torque as shown in FIG. 1.

FIG. 1 may be a graph which does not consider travel environment and time of an electric vehicle. This is because time taken to reach the rated speed is decreased as the command torque is increased in the same travel environment, and time taken to reach the rated speed is lower on flat land rather than on an incline given the same command torque.

The specification of the driving motor or the electric vehicle may be expressed using the maximum output torque Tmax and the rated speed Nbase. Of course, the specification of the driving motor or the electric vehicle may also be expressed using the maximum speed Nmax.

However, the specification of the driving motor may be changed per manufacturer basis. In addition, the size and shape of the driving motor or the driving apparatus may be changed per electric vehicle basis. Consequently, it may be very important to improve the performance of the driving motor given the same or similar specifications.

Generally, the output of a motor of an electric vehicle may be controlled by controlling field current. The output of the motor is controlled to follow an input command torque. If the command torque is input, the field current is controlled so that the output of the motor follows the command torque.

The input command torque may be calculated in proportion to an accelerator pressing angle. That is, as the accelerator pressing angle is increased, the command torque is increased. Control may be performed so that the field current is increased as the command torque is increased. In other words, control may be performed so that a field current value applied to the motor is increased as the command torque is increased. This may be normal control or command torque following control.

As in a general engine, the driving motor of the electric vehicle may overheat. That is, the driving motor may be overheated in a severe driving environment with the result that the motor may be damaged. In order to prevent the motor from overheating, a motor limit temperature may be preset. That is, the temperature of the motor may be properly controlled as not to exceed the motor limit temperature, thereby preventing damage to the motor.

For example, in a case in which the motor is overheated with the result that the temperature of the motor exceeds the motor limit temperature, the motor or an inverter to control driving of the motor may be stopped or the output of the motor may be restricted so that the motor is not damaged due to overheating. This may be referred to as overheating prevention control. That is, driving of a motor control unit may be stopped, or the output of the motor may be forcibly lowered irrespective of the present command torque. In other words, if a specific condition is satisfied during the performance of normal control (command torque following control), the command torque following control may be stopped, and overheating prevention control may be performed.

During driving of the motor, temperature of a rotor and temperature of a stator may be different from each other. In the conventional art, however, the overheating prevention control is performed instead of the normal control when the temperature of the rotor or the temperature of the stator reaches the motor limit temperature. That is, the overheating prevention control is performed to stop driving of the motor or the inverter or to restrict the output of the motor. Consequently, frequency and possibility of the normal control being switched to the overheating prevention control is increased with the result that driving of the motor is very inefficiently controlled.

The overheating prevention control is performed to protect the motor irrespective of user command output. If the normal control is frequently switched to the overheating prevention control, reliability of the motor or the electric vehicle may be lowered. This is because if the normal control is frequently switched to the overheating prevention control, the performance of the motor cannot be properly exhibited in a severe driving operation.

Also, if the normal control is frequently switched to the overheating prevention control, time taken to perform the severe driving operation may be decreased. In consideration of various driving conditions or various driving propensities of drivers, it is difficult to effectively satisfy these factors.

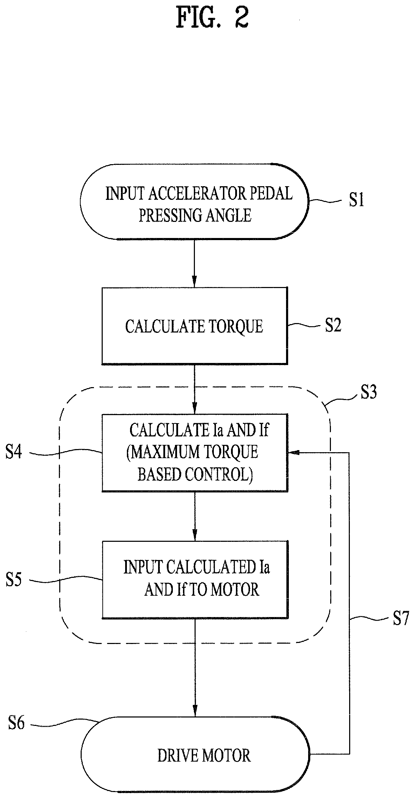

FIG. 2 is a flow chart for controlling the output of a field coil motor (field winding motor) by controlling field current and armature current of the motor. In a case in which the field coil motor is used as a driving motor for electric vehicles, the field coil motor may be controlled as follows.

First, a command torque is calculated (S2). The command torque may be calculated based on an accelerator pedal pressing angle. That is, when a driver presses an accelerator pedal, an accelerator pedal pressing angle is input (S1), and the command torque is calculated based on the accelerator pedal pressing angle (S2).

When the command torque is calculated, the motor is controlled to follow the command torque (S3), and therefore, the motor is driven (S6).

The command torque following control is performed to calculate a field current value If and an armature current value Ia input with respect to the command torque (S4) and to apply the calculated current values to the motor (S5). Subsequently, the motor is driven while following the command torque based on the applied current values (S6). Of course, output torque, speed (RPM) and temperature of the motor may be fed back (S7) so that the output of the motor can be controlled to be maximally similar or equal to the command torque.

Torque T of the field coil motor is proportional to the field current If and flux. If the flux is uniform, it can be seen that as the field current value is increased, the output torque value is increased. In addition, the flux is proportional to the armature current Ia. Consequently, it can be seen that, as the armature current value is increased, the output torque value is increased. Therefore, an innumerably large number of combinations of field current and armature current may be provided to output the same torque.

To easily perform control of the motor, i.e. the command torque following control, it may be possible to perform maximum torque based control. In order to obtain the maximum torque, the field current value must become the maximum. When the command torque is input, the field current value may be simply calculated according to the following mathematical expression.

$$[\text{Mathematical expression 1}]$$

$$If = Ifmax * T / Tmax$$

As can be seen from mathematical expression 1, an input field current value If may be calculated to be proportional to an input command torque value in the maximum torque based control. For example, in a case in which the maximum field current value is 9.8 A and the maximum output torque is 280 Nm, an input field current value of 4.9 A may be simply calculated when the command torque is 140 Nm.

Consequently, the maximum torque based control may be a method of setting and inputting a field current value and an armature current value based on the maximum torque value and the maximum field current value. In other words, the maximum torque based control may be a method of inputting the maximum field current value for the maximum output torque and inputting a field current value proportional to an output torque to control the motor. When the command torque is set, the maximum field current value corresponding thereto may be set without additional calculation, thereby setting an armature current value. Consequently, it may be possible to easily control the motor.

Specifically, for the maximum torque based control, field current values and armature current values corresponding to command torque values may be provided in the form of a look-up table. Once a command torque value is input, an input field current value and an input armature current value may be automatically set according to the look-up table without additional calculation.

Even in the field coil motor, however, the temperature of the rotor and the temperature of the stator may be different from each other. In the same manner, the overheating prevention control may be performed instead of the normal control when the temperature of the rotor or the temperature of the stator reaches the motor limit temperature. As a result, frequency and possibility of performing the overheating prevention control is increased.

In addition, in a case in which the maximum torque based control is performed, a temperature increase pattern of the rotor may be different from that of the stator according to a driving condition. That is, a temperature increase rate of the rotor may be relatively high under a specific driving condition, and a temperature increase rate of the stator may be relatively high in another driving condition.

Therefore, it is necessary to provide a method of further extending a range (time, output torque, RPM, and temperature range) within which overheating prevention control is not necessary while preventing overheating of the motor, thereby efficiently controlling the motor. In addition, it is necessary to provide a method of more efficiently controlling the motor according to a driving condition.

One object is to provide a driving motor in which a normal control range or a command torque following control range is widened to improve reliability and convenience and a control method of the same.

Another object is to provide a driving motor in which time taken to reach a motor limit temperature is delayed to increase time during which normal control can be performed even in a severe driving condition and a control method of the same.

Another object is to provide a driving motor the performance of which is improved in various driving conditions of the driving motor and a control method of the same.

Another object is to provide a driving motor in which the difference between temperature of a stator and temperature of a rotor is reduced to improve the performance of the driving motor and reduce cost incurred by a cooling unit and a control method of the same.

Another object is to provide a driving motor in which rated output of the driving motor is increased to improve the performance of the driving motor and a control method of the same.

Another object is to provide a driving motor in which temperature of a rotor is controllably calculated without an additional temperature sensor to sense the temperature of the rotor and a control method of the same. In other words, this object is devised to solve the problem that lies on a driving motor that is economical and controllable based on the temperature of the rotor.

Additional advantages, objects, and features will be set forth in part in the description which follows and in part will become apparent to those having ordinary skill in the art upon examination of the following or may be learned from practice of the invention. The objectives and other advantages may be realized and attained by the structure particularly pointed out in the written description and claims hereof as well as the appended drawings.

The invention is defined by the appended independent claims, and preferred aspects of the invention are defined by the appended dependent claims. To achieve these objects and other advantages and in accordance with the disclosure, there may be provided with a driving motor for an electric vehicle which includes a rotor having a field coil wound thereon, a stator having an armature coil wound thereon, wherein the driving motor includes a motor control unit to perform temperature based control between the stator and the rotor based on which one has a higher temperature than the other, in order to input a reduced current value to the one having the higher temperature than the other.

To achieve these objects and other advantages and in accordance with the disclosure, there may be also provided a driving motor for an electric vehicle which includes a rotor having a field coil wound thereon and having a predetermined motor limit temperature, the driving motor comprises a motor control unit performing temperature based control to reduce a current value input to one selected from between the stator and the rotor, which has a higher temperature than the other, and to input the reduced current value.

In a case in which a driving condition of the driving motor is a maximum output condition, the motor control unit may decrease an armature current value and increase a field current value to delay time taken for a temperature of the stator to reach a predetermined motor limit temperature.

In a case in which a driving condition of the driving motor is a rated output condition, the motor control unit may increase the armature current value and decrease the field current value to delay time taken for a temperature of the rotor to reach the predetermined motor limit temperature.

The motor control unit may control a difference between the temperature of the stator and the temperature of the rotor to be within a predetermined range. Consequently, it is possible to prevent the temperature of one selected between the stator and the rotor being excessively increased as compared with that of the other and thus reaching the predetermined motor limit temperature.

The temperature based control may be performed in a case in which the temperature of the stator or the temperature of the rotor is within a predetermined deviation with respect to the predetermined motor limit temperature.

The driving motor may further include an air flow induction device or a blade provided at the front and/or rear of the driving motor. Consequently, it is possible to easily cool the rotor, in which it is relatively difficult to provide a cooling unit, through a simple structure.

The temperature of the stator and the temperature of the rotor may be sensed by a temperature sensor or calculated based on a sensed input current value and input voltage value. Specifically, the temperature of the rotor may be calculated based on feedback information. This is because the rotor is a rotatable component, and therefore, it may be relatively difficult to mount the temperature sensor to the rotor.

In a case in which both the temperature of the stator and the temperature of the rotor are out of a predetermined deviation with respect to the predetermined motor limit temperature, the motor control unit may perform maximum torque based control to set a field current value and an armature current value based on a maximum torque value and to input the set field current value and the set armature current value to the respective rotor and stator.

In a case in which the difference between the temperature of the stator and the temperature of the rotor is within a predetermined deviation, the motor control unit may perform the temperature based control, and, in a case in which the difference between the temperature of the stator and the temperature of the rotor is out of the predetermined deviation, the motor control unit may perform the maximum torque based control. On the other hand, in a case in which the difference between the temperature of the stator and the temperature of the rotor is within a predetermined deviation, the motor control unit may perform the maximum torque based control, and, in a case in which the difference between the temperature of the stator and the temperature of the rotor is out of the predetermined deviation, the motor control unit may perform the temperature based control.

This may be described from the following points of view.

To perform the temperature based control in a case in which the difference between the temperature of the stator and the temperature of the rotor is within the predetermined deviation may be to perform active control to prevent the temperature of one selected from between the stator and the rotor being excessively increased as compared with that of the other and thus reaching the predetermined motor limit temperature. In this case, however, the number of combinations of field current values and armature current values may be few. As a result, control out of the predetermined deviation may not be easy. That is, in this case, the temperature based control may be performed over almost all regions.

To perform the temperature based control in a case in which the difference between the temperature of the stator and the temperature of the rotor is out of the predetermined deviation may be to perform control to prevent or delay the increase in temperature of the stator or the rotor after the temperature of one selected from between the stator and the rotor is excessively increased as compared with that of the other. In a case in which the difference between the temperature of the stator and the temperature of the rotor is within the predetermined deviation, therefore, the maximum torque based control may be performed.

In another aspect, a driving motor for an electric vehicle includes a rotor having a field coil wound thereon and a stator having an armature coil wound thereon, and the driving motor having a predetermined motor limit temperature. The driving motor includes a motor control unit to change a ratio of an armature current value to a field current value (a current ratio) with respect to a command torque based on a temperature of the stator and a temperature of the rotor to input the field current value and the armature current value to the respective rotor and stator based on the changed current ratio.

The motor control unit may increase the current ratio in a case in which the temperature of the stator is higher than that of the rotor and decrease the current ratio in a case in which the temperature of the stator is lower than that of the rotor.

The motor control unit may control the current ratio to be changed based on a plurality of combinations of field current and armature current with respect to the same command torque.

In another aspect, a driving motor for an electric vehicle includes a rotor having a field coil wound thereon and a stator having an armature coil wound thereon, and the driving motor having a predetermined motor limit temperature. The driving motor includes a motor control unit to input field current and armature current based on temperature in a case in which a difference between temperature of the stator and temperature of the rotor is within a predetermined deviation and to input the field current and the armature current based on maximum torque in a case in which the difference between the temperature of the stator and the temperature of the rotor is out of the predetermined deviation.

In another aspect, a driving motor for an electric vehicle includes a frame, a stator having an armature coil wound thereon, a rotor rotatably provided inside the stator, the rotor having a field coil wound thereon, a rotary shaft connected to the rotor, a temperature sensor to sense temperature of the stator, and a motor control unit to control output by adjusting an armature current value input to the armature coil and a field current value input to the field coil.

The motor control unit may selectively perform maximum torque based control and temperature based control based on the temperature of the stator sensed by the temperature sensor and temperature of the rotor calculated through feedback information. Specifically, the motor control unit may selectively perform maximum torque based control and temperature based control based on the difference between the temperature of the stator and the temperature of the rotor.

In a case in which a driving condition of the driving motor is a maximum output condition, the motor control unit may perform temperature based control to decrease an armature current value and to increase a field current value in order to delay time taken for the temperature of the stator to reach the predetermined motor limit temperature.

In a case in which a driving condition of the driving motor is a rated output condition, the motor control unit may perform temperature based control to increase an armature current value and to decrease a field current value in order to delay time taken for the temperature of the rotor to reach the predetermined motor limit temperature.

The temperature of the rotor and the temperature of the stator may be sensed by a temperature sensor or calculated based on a sensed input current value and input voltage value.

In another aspect, a control method of a driving motor for an electric vehicle having an output torque proportional to a field current value and an armature current value includes determining by a motor control unit a temperature of a rotor and a temperature of a stator, comparing by the motor control unit the temperature of the rotor and the temperature of the stator with each other, and performing by the motor control unit a temperature based control of calculating and inputting a different field current value and an armature current value corresponding to a command torque according to a comparison result.

In another aspect, a control method of a driving motor for an electric vehicle having an output torque proportional to a field current value and an armature current value, comprising: a step of setting a command torque; a step of calculating a temperature based on field current (field temperature) and a temperature based on armature current (armature temperature); a step of comparing the calculated field temperature and the calculated armature temperature with each other; and a temperature based control step of differently calculating and inputting a field current value and an armature current value corresponding to the command torque according to a comparison result.

Control may be performed to decrease the field current value and to increase the armature current value in a case in which the temperature of the rotor is high and to increase the field current value and to decrease the armature current value in a case in which the temperature of the rotor is low.

The temperature based control may be performed in a case in which a difference between the temperature of the rotor and the temperature of the stator is greater than a predetermined deviation at the comparison step.

The control method may further include a maximum torque based control of calculating and inputting field current and armature current based on the command torque, a maximum field current, and a maximum torque in a case in which the difference between the temperature of the rotor and the temperature of the stator is less than the predetermined deviation.

In a further aspect, a control method of a driving motor for an electric vehicle, the driving motor comprising a rotor having a field coil wound thereon, and a stator having an armature coil wound thereon, the method comprising: determining by a motor control unit a temperature of the rotor and a temperature of the stator ; determining by the motor control unit, which one of the temperature of the rotor and the temperature of the stator has a higher temperature than the other; and controlling by the control unit to reduce (delay a current value input to the one having higher temperature than the other.

In a further aspect, a control method of a driving motor for an electric vehicle having an output torque proportional to a field current value and an armature current value includes determining a driving condition of the driving motor, calculating a difference between a temperature based on field current (field temperature) and a temperature based on armature current (armature temperature), a rated output control of decreasing the field current value and increasing the armature current value to reduce the difference between the field temperature and the armature temperature in a case in which the driving condition of the motor is a rated output condition, and a maximum output control of increasing the field current value and decreasing the armature current value to reduce the difference between the field temperature and the armature temperature in a case in which the driving condition of the motor is a maximum output condition.

In a further aspect, a control method of a driving motor for an electric vehicle having an output torque proportional to a field current value and an armature current value, comprising: a step of determining a driving condition of the motor; a comparison step of calculating a difference between a temperature based on field current (field temperature) and a temperature based on armature current (armature temperature); a rated output control step of decreasing the field current value and increasing the armature current value to reduce the difference between the field temperature and the armature temperature in a case in which the driving condition of the motor is a rated output condition; and a maximum output control step of increasing the field current value and decreasing the armature current value to reduce the difference between the field temperature and the armature temperature in a case in which the driving condition of the motor is a maximum output condition.

It is to be understood that both the foregoing general description and the following detailed description of the present disclosure are exemplary and explanatory.

The accompanying drawings, which are included to provide a further understanding of the disclosure and are incorporated in and constitute a part of this application, illustrate embodiment(s) of the invention and together with the description serve to explain the principle of the invention. In the drawings:

FIG. 1 is a graph showing a relationship between output (a command torque) and RPM of a driving motor for electric vehicles;

FIG. 2 is a flow chart showing control based on maximum torque;

FIG. 3 is an exploded perspective view showing a field winding motor applicable to embodiments of the present invention;

FIG. 4 is a block diagram of the field winding motor applicable to the embodiments of the present invention;

FIG. 5 is a flow chart showing a control method according to an embodiment of the present invention;

FIG. 6 is a graph showing the change in temperature of a stator and a rotor under a maximum output condition; and

FIG. 7 is a graph showing the change in temperature of the stator and the rotor under a rated output condition.

Reference will now be made in detail to the preferred embodiments of the present invention, examples of which are illustrated in the accompanying drawings. Wherever possible, the same reference numbers will be used throughout the drawings to refer to the same or like parts.

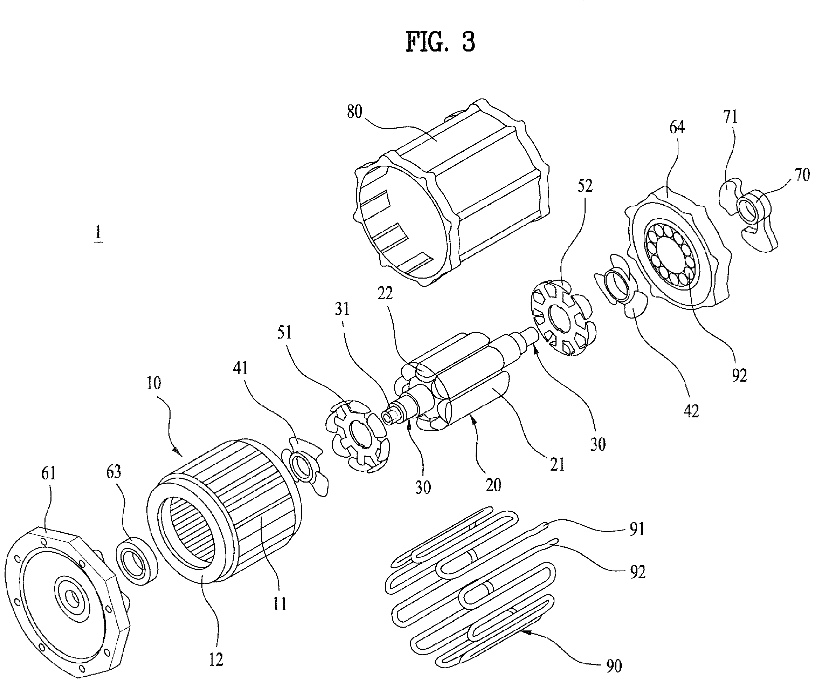

FIG. 3 is an exploded perspective view showing a driving motor 1 for electric vehicles applicable to embodiments of the present invention. Specifically, FIG. 3 shows an embodiment of a field coil motor 1.

The motor 1 may include a stator 10 and a rotor 20. The rotor 20 is rotated relative to the stator 10 through electromagnetic interaction with the stator 10.

The stator 10 may include a stator core 11. Also, the stator 10 may include a stator coil 12 to form magnetic flux. The stator coil 12 is wound on the stator core 11. Consequently, the stator 10 may be an electromagnet.

The rotor 20 may be rotatably disposed inside the stator 10.

The rotor 20 may include a rotor core 21. Also, the rotor 20 may include a rotor coil 22 wound on the rotor core 21.

The rotor coil 22 may be a field coil, and the stator coil 12 may be an armature coil. Consequently, output of the rotor 20 may be controlled based on a field current value and an armature current value applied to the field coil and the armature coil, respectively.

The rotor 20 is connected to a rotary shaft 30. The rotary shaft 30 may be connected to a drive shaft of a vehicle (not shown). Consequently, torque and RPM of the rotor 20 may be transmitted to the drive shaft of the vehicle via the rotary shaft 30. For connection between the rotary shaft 30 and the drive shaft, a hollow part 31 may be formed in the rotary shaft 30. The connection between the rotary shaft 30 and the drive shaft is achieved by inserting the drive shaft into the hollow part 31.

The connection between the rotary shaft 30 and the drive shaft is easily achieved by the provision of the hollow part 31. Also, the increase in length of the motor or driving apparatus due to the connection between the rotary shaft 30 and the drive shaft is prevented. In addition, it is not necessary to provide an additional space for connection between the rotary shaft 30 and the drive shaft outside the motor.

End plates 51 and 52 may be provided at the front and rear of the rotor 20, respectively. The field coil 22 may be stably fixed by the end plates 51 and 52. That is, the field coil 22 may be stably fixed to the rotor core 21 by the end plates 51 and 52 even when the field coil 22 is rotated.

A front bracket 61 and a rear bracket 62 may be provided at the front and rear of the stator 10 and the rotor 20, respectively. In addition, a frame 80 may be provided to surround the stator 10 and the rotor 20. The stator 10 and the rotor 20 may be disposed in the brackets and the frame.

A front bearing 63 may be provided at the front of the rotary shaft 30, and a rear bearing 64 may be provided at the rear of the rotary shaft 30. The rotor 20 and the rotary shaft 30 may be rotatably supported with respect to the brackets through the bearings. The bearings are supported by the respective brackets. Consequently, the brackets 61 and 62 may be bearing housings

The stator 10 may be stably fixed to the inside of the frame 80. In addition, opposite sides of the frame 80 may be coupled to the front bracket 61 and the rear bracket 62, respectively.

A cooling tube 90 may be provided to prevent overheating of the motor. The cooling tube 90 may be configured in the form of a coil. The cooling tube 90 may be interposed between the stator 10 and the frame 80. A coolant may flow through the cooling tube to directly cool the stator 10 and the frame 80. That is, the cooling tube 90 may be in direct contact with the stator 10 to cool the stator 10 through heat conduction.

In addition, an air flow induction device may be provided to induce air flow in the motor 1, specifically an inner space defined by the frame 80 and the brackets. The air flow induction device may be configured in the form of fans or blades 41 and 42. The blades 41 and 42 are coupled to the rotary shaft 30 so that the blades can be rotated together with the rotary shaft. In addition, the blades 41 and 42 may be provided at the front and rear of the rotary shaft 30, respectively.

A pair of slip rings 70 and a pair of brushes 71 may be provided outside the rear bracket 62. The slip rings 70 are coupled to the rotary shaft 30. Field current flows to the field coil 22 via the slip rings 70.

That is, the slip rings 70 and the brushes 71 are configured so that field current from outside the rotor 20 can flow to the field coil 22. In other words, the field current may be supplied from a DC power supply (for example, a battery) via the brushes 71 and the slip rings 70.

Meanwhile, the rear bracket 62 may be formed to fix an inlet port 91, through which a coolant is supplied to the cooling coil 90, and an output port 92, through which the coolant is withdrawn, or to connect the inlet port 91 and the output port 92 to the outside. In addition, a connection part to supply armature current may be provided at the rear bracket 62.

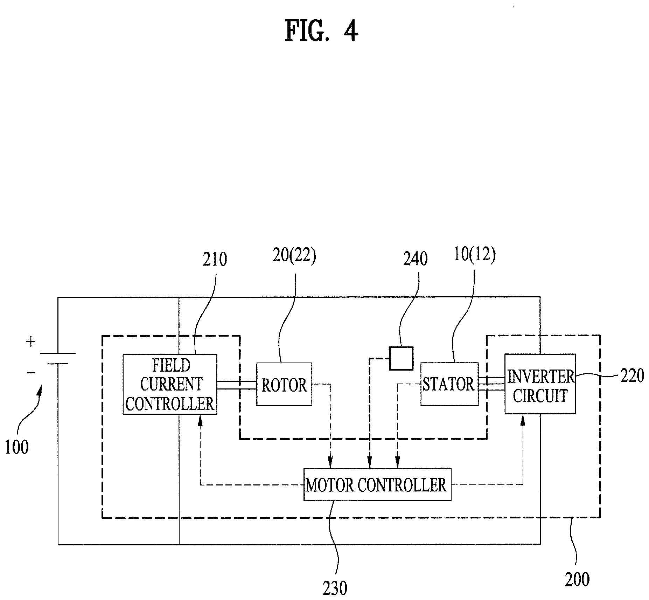

Hereinafter, a circuit to control the motor 1 and a motor control unit will be described in detail with reference to FIG. 4.

DC power from a battery 100 is supplied to the motor 1. Specifically, the field coil (rotor coil) 22 and the armature coil (stator coil) 12 may be connected to each other in parallel.

A field current value applied to the field coil and an armature current value applied to the armature coil may be decided by a motor controller 230. The field current value decided by the motor controller 230 may be applied to the field coil 22 via a field current controller 210. In addition, the armature current value decided by the motor controller 230 may be applied to the armature coil 12 via an inverter circuit 220. Fig. 3 shows an example in which DC current is converted into three phase AC current by the inverter circuit 220 and is then applied to the armature coil. Consequently, the motor controller 230 may include an inverter driving unit to drive the inverter circuit 220.

The field current controller 210, the motor controller 230, and the inverter circuit 220 may be integrated into a single unit. That is, these components may be integrated into a single unit for easy manufacture, handling, and installation. Consequently, these components may be referred to as a motor control unit 200. In addition, the motor control unit 200 may be referred to as an inverter. In this case, the inverter may be regarded as including the field current controller 210, an inverter driving circuit (not shown), and the inverter circuit 220.

The motor controller 230 or the motor control unit 200 may receive a large amount of information from the rotor 20 and the stator 10. For example, the motor controller 230 or the motor control unit 200 may receive information regarding present RPM and torque of the rotor 20 and temperature of the stator 10. In addition, the motor controller 230 or the motor control unit 200 may calculate a present command torque or receive information for calculation of the command torque.

Consequently, the motor controller 230 or the motor control unit 200 may control the field current value and the armature current value to be properly applied based on a command torque and status information (an output torque, RPM, temperature, voltage value, and current value). That is, the motor controller 230 or the motor control unit 200 may perform feedback control.

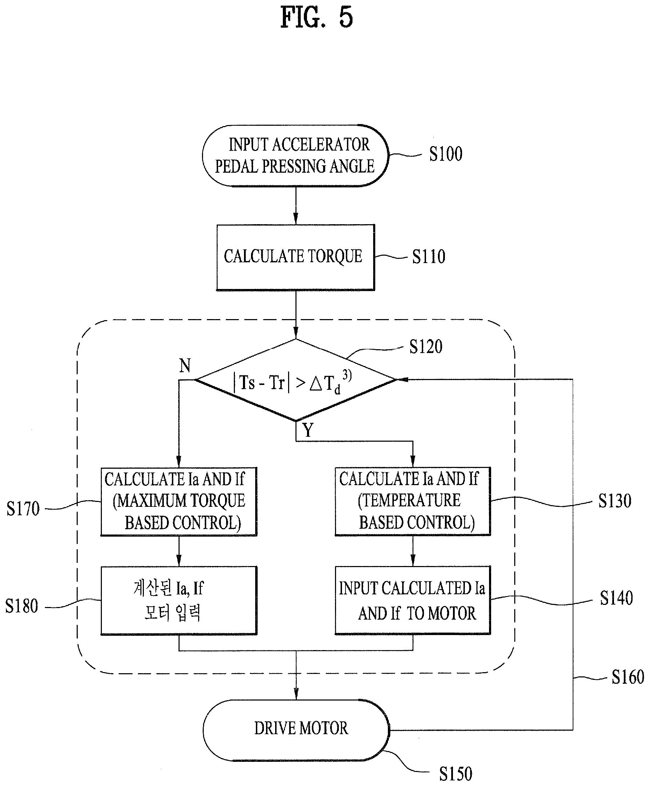

Hereinafter, a control method of a driving motor according to an embodiment of the present invention will be described in detail with reference to FIG. 5.

According to an embodiment of the present invention, it is possible to provide a method of controlling a motor in consideration of temperature of the rotor as well as temperature of the stator. That is, it is possible to provide a method of controlling the motor in consideration of both temperature of the stator and temperature of the rotor based on a predetermined limit temperature of the motor. Here, the limit temperature may be preset by applying a safety rate to a real breakdown temperature of the motor.

As previously described, a large number of combinations of field current If and armature current Ia with respect to the same command torque are theoretically possible. This is because both a field current value and an armature current value are proportional to torque. The greater the field current value is with respect to the same torque, the less the armature current value is. In this case, an amount of heat generated from the field coil is relatively increased. On the other hand, the less the field current value is, the greater the armature current value is. In this case, an amount of heat generated from the armature coil is relatively increased.

Since the difference of relative positions between the stator and the rotor, presence or absence of a cooling unit, and the shape or position of the cooling unit may be variously changed, there are various real temperature of the stator and real temperature of the rotor. That is, it is not possible to correctly represent present temperature of the stator and present temperature of the rotor based on only presently input field current value and armature current value.

According to the embodiment of the present invention, the motor control unit 200 may perform temperature based control (S130 and S140) to control the motor based on temperature of the stator and temperature of the rotor. That is, it is possible to perform temperature based control to control the motor based on temperature of the stator and the rotor which is sensed, fed back, or calculated.

Specifically, the motor control unit may perform temperature based control to reduce a current value input to one selected from between the stator and the rotor, which has a higher temperature than the other, and to input the reduced current value. For example, if the temperature of the stator is higher than that of the rotor, an armature current value input to the stator may be reduced to prevent or delay the increase in temperature of the stator. On the other hand, if the temperature of the rotor is higher than that of the stator, a field current value input to the rotor may be reduced to prevent or delay the increase in temperature of the rotor. Consequently, it is possible to delay arrival of the temperature of one selected from between the stator and the rotor, which has higher temperature than the other, to the predetermined limit temperature.

Here, the temperature based control may be command torque following control or normal control. That is, control may be performed to generate an output torque based on an input command torque.

To this end, control may be performed so that if an input field current value is decreased, an input armature current value is increased for output of the same torque. On the other hand, control may be performed so that if an input field current value is increased, an input armature current value is decreased. Consequently, the command torque following control may be performed based on the temperature based control.

Specifically, as previously described, a large number of combinations of field current values and armature current values with respect to the same command torque may be possible. Consequently, a plurality of combinations of field current values and armature current values with respect to the same command torque may be provided. Of course, a plurality of command torque input values may be also provided. Consequently, a plurality of field current values and armature current values with respect to a plurality of command torques may be provided in the form of a look-up table.

For example, in a case in which a command torque is 140 Nm (50 % of the maximum torque) in the above maximum torque based control, a field current value may be set to 4.9 A (50 % of the maximum field current value), and an armature current value may be set to 4.2A. That is, only one field current value and one armature current value may be set with respect to one command torque.

In the temperature based control according to the embodiment of the present invention, however, a plurality of combinations of field current values and armature current values may be provided with respect to one command torque. Consequently, it is possible to set a proper field current value and a proper armature current value through the combinations of field current values and armature current values based on temperature of the stator and temperature of the rotor (S130). Subsequently, the set field current value and the set armature current value are input (S140) to perform the command torque following control (S150) . Of course, even in this case, a current value, a voltage value, output torque, and temperature may be fed back to perform more precise motor control (S160).

The plurality of combinations of field current values and armature current values may be provided in the form of a look-up table. Consequently, it is possible to easily set an input field current value and an input armature current value without complicated calculation using the look-up table. This is because, in the case of the same command torque, it is possible to select a field current value and an armature current value which is one step higher or one step lower than presently input values through the temperature based control.

For example, if temperature of the stator is higher than that of the rotor, it may be possible to select a field current value and an armature current value which is one step higher or several steps higher than the present field current value so that the armature current value is decreased and the field current value is increased. On the other hand, if temperature of the rotor is higher than that of the stator, it may be possible to select a field current value and an armature current value which is one step lower or several steps lower than the present field current value so that the armature current value is increased and the field current value is decreased.

The temperature of the stator 10 may be easily detected by a temperature sensor 240 shown in FIG. 4. Since the stator 10 is a fixed component, the temperature sensor 240 may be mounted to the stator 10 to easily detect the temperature of the stator 10. That is, the motor controller 230 or the motor control unit 200 may detect the temperature of the stator 10 or the temperature of the armature coil through the temperature sensor 240.

However, the rotor 20 is a rotatable component. Consequently, although a temperature sensor may be used, it may be difficult to detect the temperature of the rotor or the temperature of the field coil through a temperature sensor. This is because it is not easy to mount the temperature sensor to such a rotatable component. For this reason, the temperature of the rotor or the temperature of the field coil may be controllably calculated. Of course, the temperature of the stator may also be controllably calculated in the same manner. That is, it may be possible to calculate the temperature of the rotor and the temperature of the stator based on an input current value and an input voltage value applied to the field coil 22 and the armature coil 12.

Specifically, the temperature of the rotor may be calculated based on a present field current value and a present field voltage value and a field current value and a field voltage value during driving of the motor. The field current value and the field voltage value during driving of the motor may be detected through feedback. The motor controller 230 or the motor control unit 200 may store the field current value and the field voltage value during driving of the motor.

Consequently, the motor controller 230 or the motor control unit 200 may detect resistance R0 of the field coil during driving of the motor based on the field current value and the field voltage value during driving of the motor using Ohm's law. That is, an initial resistance R0 of the field coil may be detected. Of course, it may be possible to detect a present resistance R of the field coil based on the present field current value which has been fed back and the present field voltage value which has been fed back using Ohm's law. In addition, an initial temperature T0 of the rotor may be preset.

Meanwhile, there is a correlation between the temperature and electric resistance of a coil. That is, as the temperature of the coil is increased, the electric resistance of the coil is increased. This is a unique characteristic, such as a resistance coefficient per temperature, based on a material of the coil. Copper may have a resistance coefficient per temperature of 0.004.

Consequently, the present temperature of the rotor may be calculated according to the following mathematical expression.

[Mathematical expression]

$$T \text{ (present temperature of rotor)} = T0 + (R/R0 - 1)/0.004$$

That is, it may be possible to calculate the temperature of the rotor based on a resistance value increased according to the rise in temperature.

The motor controller 230 or the motor control unit 200 may perform temperature based control based on sensed or calculated temperature of the stator and sensed or calculated temperature of the rotor. The temperature of the rotor may be easily calculated according to the above mathematical expression 2.

Meanwhile, the temperature based control may be performed in a state in which a ratio of an armature current value to a field current value (a current ratio) is changed. That is, it is possible to change the current ratio with respect to a command torque based on the temperature of the stator and the temperature of the rotor and to input the field current value and the armature current value.

To increase the current ratio with respect to the same command torque means to decrease the field current value and to increase the armature current value. In a case in which the temperature of the rotor is higher than that of the stator, control may be performed to increase the current ratio. Of course, a plurality of current ratio combinations may be provided with respect to the same command torque.

It may be possible to perform control by reflecting contribution of the field current value and the armature current value through such a current ratio. In other words, it may be possible to more flexibly set the field current value and the armature current value. This is because it may be possible to gradually or rapidly control the current ratio according to the present temperature of the stator and the present temperature of the rotor.

As shown in FIG. 5, the temperature based control (S130 and S140) may be performed after a determination step (S120) . Of course, input of an angle of an accelerator pedal (S100) and calculation of a command torque (S110) may be performed before the determination step (S120).

At the determination step, a driving condition of the driving motor or the electric vehicle may be considered. That is, it may be determined whether the driving condition is a condition that relatively increases the temperature of the rotor or a condition that relatively increases the temperature of the stator.

As will hereinafter be described, in a case in which the driving condition of the driving motor is a maximum output condition, the increase width in temperature of the stator is relatively large. Upon determining at the determination step that the driving condition of the driving motor is the maximum output condition, the temperature based control (S130 and S140) may be performed to decrease the armature current value and to increase the field current value.

As will hereinafter be described, in a case in which the driving condition of the driving motor is a rated output condition, the increase width in temperature of the rotor is relatively large. Upon determining at the determination step that the driving condition of the driving motor is the rated output condition, the temperature based control (S130 and S140) may be performed to increase the armature current value and to decrease the field current value.

As shown in FIG. 5, the temperature based control (S130 and S140) may not always be performed. That is, the temperature based control may not always be performed for command torque following control. This is because such temperature based control may not be necessary in a driving condition or driving region in which the temperature of the motor is insignificant. For example, such temperature based control may not be necessary in a low-speed driving condition, a driving condition having a small command torque, or a city driving condition in which a vehicle repeatedly starts and stops.

According to the embodiment of the present invention, the maximum torque based control and the temperature based control may be selectively performed.

To this end, the maximum torque based control or the temperature based control may be selected at the determination step (S120). According to the determination result at the determination step, the maximum torque based control may be performed or the temperature based control may be performed.

For example, in a case in which the difference between the temperature of the stator and the predetermined limit temperature of the motor and the difference between the temperature of the rotor and the predetermined limit temperature of the motor are great, the maximum torque based control may be selected at the determination step (S120), and then the maximum torque based control (S170 and S180) may be performed. That is, in a case in which the temperature of the stator is greatly lower than the predetermined limit temperature of the motor and the temperature of the rotor is greatly lower than the predetermined limit temperature of the motor, the maximum torque based control may be performed.

On the other hand, in a case in which the temperature of the stator or the temperature of the rotor is within a predetermined deviation between the temperature of the stator or the temperature of the rotor and the limit temperature of the motor, the temperature based control may be selected at the determination step (S120).

For example, the limit temperature of the motor may be preset to 170 °C. In addition, the temperature deviation may be set to 30 °C. In a case in which the temperature of the stator or the temperature of the rotor is 140 °C or higher, the temperature based control may be selected at the determination step (S120). At this time, in a case in which the temperature of the stator is higher than that of the rotor, the temperature based control may be performed to prevent or delay the increase in temperature of the stator.

In the above embodiment, the difference between the temperature of the stator and the temperature of the rotor is not considered. That is, the focus is to delay arrival of higher temperature to the limit temperature of the motor.

For example, in a case in which the temperature of the stator is 150 °C or higher, and the temperature of the rotor is 100 °C, the temperature of the rotor is not greatly considered. This is because the temperature of the stator is close to the limit temperature of the motor but it takes considerable time for temperature of the rotor to reach the limit temperature of the motor.

In this state, however, it may not be desirable to perform the temperature based control. This is because although the temperature based control is performed, the temperature of the stator may reach the limit temperature of the motor when considering feedback time. Consequently, it may be necessary to more actively perform the temperature based control.

To this end, as shown in FIG. 5, the difference between temperature Ts of the stator and temperature Tr of the rotor may be calculated at the determination step (S120), and the calculated difference may be compared with a predetermined temperature deviation ΔTd to determine whether the temperature based control is to be performed.

For example, the temperature deviation ΔTd may be set to 3 °C. In a case in which the temperature deviation is greater than 3 °C, therefore, it may be determined that the temperature based control is to be performed. This means that it is possible to actively perform the temperature based control so that the temperature deviation is not greater than 3 °C. That is, it means that it is possible to prevent one temperature from being excessively greater than the other temperature. Consequently, it is possible to actively and efficiently perform the temperature based control irrespective of the present driving condition.

On the other hand, in a case in which the temperature deviation is less than 3 °C, the maximum torque based control may be performed. Consequently, the control condition may be changed as needed to more efficiently control driving of the motor. As a result, it is possible to actively perform control so that the difference between the temperature of the stator and the temperature of the rotor is not greater than the predetermined deviation.

Meanwhile, the temperature deviation ΔTd may be set to 5 °C. In a case in which the temperature deviation between the stator and the rotor is greater than 5 °C, the temperature based control may be performed to reduce the temperature deviation. Consequently, it is possible to maximally delay the arrival of the temperature of one selected from between the stator and the rotor to the predetermined limit temperature. On the other hand, in a case in which the temperature deviation between the stator and the rotor is less than 5 °C, the maximum torque based control may be performed.

Since the maximum torque based control and the temperature based control are performed based on a predetermined value of the temperature deviation, the predetermined value of the temperature deviation is very important. This is because switching between control modes may be frequently carried out if the predetermined value of the temperature deviation is small. Also, switching between control modes may be insignificant if the predetermined value of the temperature deviation is large. In consideration of this, the predetermined value of the temperature deviation may be set to between 3 °C and 10 °C.

Hereinafter, effects of embodiments of the present invention based on the change in temperature of the stator and the rotor in the driving condition of the driving motor will be described.

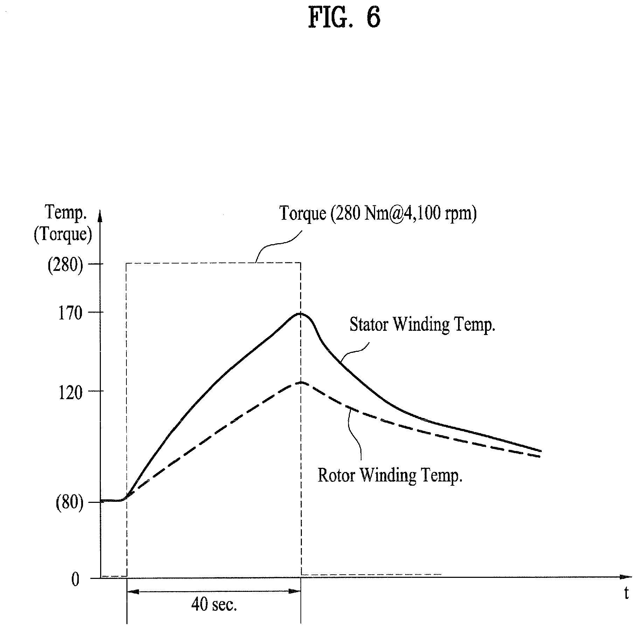

First, FIG. 6 is a graph showing the change in temperature when the maximum torque based control is performed under a maximum output condition.

Specifically, FIG. 6 shows time taken to reach a limit temperature (for example, 170 °C) when a maximum output (for example, a rated speed of 4100 RPM being maintained and a maximum torque of 280 Nm being commanded) is obtained in a certain output state (for example, a torque of 80 Nm and a rated speed of 4100 RPM).

In the maximum output condition, the increase width in temperature of the stator is greater than that of the rotor, and therefore, the temperature of the stator more rapidly reaches the limit temperature of the motor. In this condition, therefore, the temperature of the stator rather than the temperature of the rotor may decide the performance of the motor. That is, time (for example, 40 seconds) taken for the temperature of the stator to reach the limit temperature may decide the performance of the motor. In other words, it is possible to improve the performance of the motor by further increasing such arrival time.

FIG. 6 shows a maximum output condition as a very extreme driving condition. In this case, it may be difficult to perform the temperature based control. This is because the maximum field current value is always input in this condition with the result that it is not easy to change the field current value through the temperature based control.

In a case in which the maximum output condition is defined as a driving condition having a rated output or higher, however, it is possible to perform the temperature based control. For example, if a rated output is defined when a torque is 117 Nm at a rated speed of 4100 RPM, a maximum output condition may be defined when a command torque is 117 Nm or more.

As previously described, the difference between the temperature of the stator and the temperature of the rotor may be reduced through the temperature based control. This is because it is possible to increase a temperature increase rate of the rotor instead of decreasing a temperature increase rate of the stator. This is because, as shown, when the temperature of the stator reaches the limit temperature, the difference between the temperature of the rotor and the limit temperature is great. Consequently, it is possible to further increase time taken for the temperature of the stator to reach the limit temperature by decreasing load of the stator and increasing load of the rotor.

Specifically, in the maximum output condition, the temperature based control may be performed so that the current ratio according to the temperature based control is less than the current ratio according to the maximum torque based control, thereby improving the performance of the motor. Consequently, it is possible to improve the performance of the motor by further increasing time taken to reach the limit temperature. That is, it is possible to perform the command torque following control for a longer period of time in a severe environment. This means that it is possible to improve the performance of the motor by delaying time taken for the temperature of the stator to reach the limit temperature.

In addition, energy loss due to the stator is greater than that due to the rotor in the maximum output condition. In the maximum output condition, therefore, it is possible to reduce overall energy loss by reducing energy loss due to the stator.

Meanwhile, the maximum output condition may be a driving condition in which an increase rate of the command torque is greater than a predetermined value. In other words, the maximum output condition may be a driving condition in which the command torque is instantaneously increased. In addition, in a case in which the maximum torque based control is performed, a driving condition in which load of the stator is greater than that of the rotor may be regarded as the maximum output condition. Consequently, it is possible to improve the performance of the motor by performing the temperature based control rather than the maximum torque based control in the maximum output condition.

Also, the maximum output condition may be a driving condition in which an increased value of the command torque is equal to or greater than the rated output. In addition, the maximum output condition may be a driving condition in which a value of the command torque is half or more the maximum output.

Specifically, the maximum output condition may be a condition in which the electric vehicle abruptly starts from a stop state or goes up a hill. Also, the maximum output condition may be a condition in which the electric vehicle travels on an expressway at very high speed.

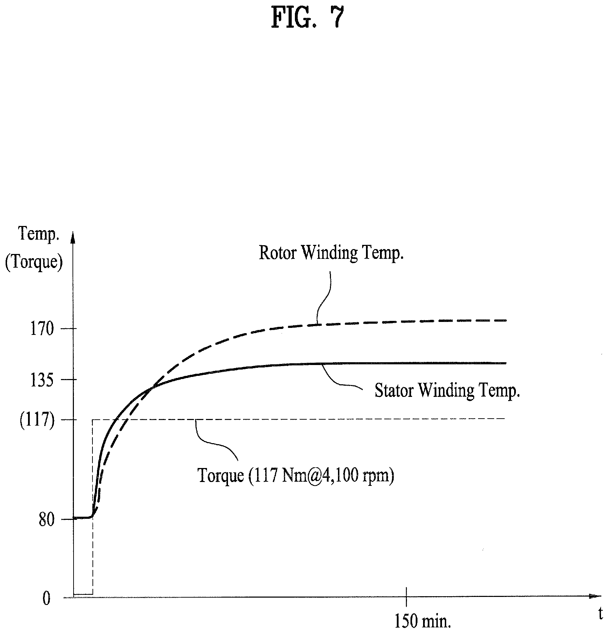

FIG. 7 is a graph showing the change in temperature when the maximum torque based control is performed under a rated output condition. In the rated output condition, for example, an output torque is 117 Nm when a rated speed is 4100 RPM. The rated output condition may be a condition in which output is continuous while the temperature of the motor does not reach the limit temperature. Here, the rated output may also represent the performance of the motor. That is, the higher the rated output is, the higher the performance of the motor is.

In the rated output condition, the increase width in temperature of the rotor is greater than that of the stator when the maximum torque based control is performed. In the rated output condition, the temperature of the rotor is closer to the limit temperature of the motor. As the temperature of the rotor reaches the limit temperature of the motor, energy loss of the rotor is greatly increased.

According to the embodiment of the present invention, it is possible to perform the temperature based control in the rated output condition so that the temperature of the rotor is relatively low and the temperature of the stator is relatively high. As a result, it is possible to reduce the difference between the temperature of the rotor and the temperature of the stator. In addition, it is also possible to increase rated output. This is because a temperature increment of the stator can be compensated by that of the rotor even if the rated output is increased to some extent.

Consequently, it is possible to improve the performance of the motor through the temperature based control. Also, it is possible to reduce energy loss of the rotor, thereby improving overall efficiency of the motor.

The rated output condition may be a city driving condition in which high output is not required or a condition in which low torque is commanded. That is, a condition in which the command torque is less than the rated torque, for example, 117 Nm may be regarded as the rated output condition. In addition, the rated output condition may be a driving condition in which an increase rate of the command torque is less than a predetermined value. That is, the rated output condition may be a driving condition in which the command torque is gradually increased.

The rated output condition may be a driving condition in which load of the rotor is greater than that of the stator when the maximum torque based control is performed. In the rated output condition, therefore, the temperature based control rather than the maximum torque based control is performed to increase the rated output, thereby improving the performance of the motor.

Also, the maximum output condition may be a driving condition in which an increased value of the command torque is less than the rated output. In addition, the maximum output condition may be a driving condition in which a value of the command torque is half or less the maximum output.

Meanwhile, in the case of a motor configured so that the rotor is rotated in the stator, it may be difficult to cool the rotor. That is, it is difficult to provide a cooling unit to cool the rotor. Even if the cooling unit is provided, cost may be unavoidably increased. In the case of a motor using a brush, on the other hand, it is difficult to fill the interior of the motor with cooling oil due to a danger of ignition.

According to the embodiments of the present invention, however, it is possible to convert a temperature increment of the rotor to that of the stator. In addition, as previously described, it is possible to relatively easily cool the stator using the cooling tube.

Consequently, it is possible to obtain effects of cost reduction, improvement of motor performance, and efficiency increase through such temperature based control. In addition, the temperature based control and the maximum torque based control may be selectively performed, and therefore, more flexible and efficiency motor control may be possible.

Also, it is possible to provide a driving motor or a driving apparatus for electric vehicles with improved efficiency and reliable controllability obtained without change of construction and a control method of the same.

According to embodiments of the present invention, it is possible to provide a driving motor in which a normal control range or a command torque following control range is widened to improve reliability and convenience and a control method of the same.

According to embodiments of the present invention, it is possible to provide a driving motor in which time taken to reach a motor limit temperature is delayed to increase time during which normal control can be performed even in a severe driving condition and a control method of the same.

According to embodiments of the present invention, it is possible to provide a driving motor, the performance of which is improved in various driving conditions of the driving motor and a control method of the same.

According to embodiments of the present invention, it is possible to provide a driving motor in which the difference between temperature of a stator and temperature of a rotor is reduced to improve the performance of the driving motor and reduce cost incurred by a cooling unit and a control method of the same.

According to embodiments of the present invention, it is possible to provide a driving motor in which rated output of the driving motor is increased to improve the performance of the driving motor and a control method of the same.

According to embodiments of the present invention, it is possible to provide a driving motor in which temperature of a rotor is controllably calculated without an additional temperature sensor to sense the temperature of the rotor and a control method of the same, and therefore, it is possible to provide a driving motor that is economical and controllable based on the temperature of the rotor.

**Claims**

1. A driving motor for electric vehicles, comprising:

   a rotor (20) having a field coil (22) wound thereon; and a stator (10) having an armature coil (12) wound thereon, and having a predetermined motor limit temperature,
   wherein the driving motor (1) comprises a motor control unit (200, 230) configured to perform a temperature based control to reduce a current value input to one selected from between the stator (10) and the rotor (20), which has a higher temperature than the other, and to input the reduced current value,
   **characterized in that** the motor control unit (200, 230) is configured to determine a first difference between a temperature of the stator (10) and a limit temperature of the motor, and a second difference between a temperature of the rotor (20) and the limit temperature of the motor, and
   wherein the motor control unit (200, 230) is configured to perform a maximum torque based control, instead of the temperature based control, of inputting field current (If) and armature current (Ia) to the respective rotor (20) and stator (10) based on a maximum torque value and a maximum field current value for the motor, i) when both the first difference and the second difference are not within a predetermined deviation, or ii) when a difference between the temperature of the stator (10) and the temperature of the rotor (20) is within another predetermined deviation.

2. The driving motor according to claim 1, wherein, in a case in which a driving condition of the driving motor (1) has a command torque having an increase rate that is greater than a predetermined value, the motor control unit (200, 230) decreases an armature current value (Ia) and increases a field current value (If) to delay time taken for a temperature of the stator to reach a predetermined motor limit temperature.

3. The driving motor according to claim 1, wherein, in a case in which a driving condition of the driving motor has a command torque having an increase rate that is less than a predetermined value, the motor control unit (200, 230) increases an armature current value (Ia) and decreases a field current value (If) to delay time taken for a temperature of the rotor to reach a predetermined motor limit temperature.

4. The driving motor according to claim 1, wherein the motor control unit controls the difference between the temperature of the stator and the temperature of the rotor to be within a predetermined range and controls the temperature of one selected from between the stator (10) and the rotor (20) to approach the motor limit temperature.

5. The driving motor according to claim 4, wherein if one of the first difference or the second difference is within the predetermined deviation, the control unit (200, 230) allows one of the stator (10) or the rotor (20) corresponding to one of the first difference or the second difference that is not within the predetermined deviation to approach a predetermined motor limit temperature.

6. The driving motor according to any one of claims 1 to 5, wherein the temperature based control is performed in a case in which the temperature of the stator (10) or the temperature of the rotor (20) is within the predetermined deviation with respect to the motor limit temperature.

7. The driving motor according to any one of claims 1 to 6, wherein if the motor control unit determines that the difference between the temperature of the stator (10) and the temperature of the rotor (20) is not within the other predetermined deviation, the control unit controls at least one of the temperature of the stator or the temperature of the rotor such that the difference between the temperature of the stator and the temperature of the rotor is within the other predetermined deviation.

8. The driving motor according to any one of claims 1 to 6, wherein, in a case in which the difference between the temperature of the stator (10) and the temperature of the rotor (20) is out of the other predetermined deviation, the motor control unit (200, 230) performs, in order to reduce the difference, the temperature based control to set a field current value and an armature current value based on temperature and to input the set field current value and the set armature current value.

9. The driving motor according to any one of claims 1 to 8, wherein the motor control unit (200, 230) changes a ratio of an armature current value to a field current value (a current ratio (1a/1f)) with respect to the command torque based on the temperature of the stator (10) and the temperature of the rotor (20) to input the field current value and the armature current value.

10. The driving motor according to claim 9, wherein the motor control unit (200, 230) increases the current ratio (la/lf) in a case in which the temperature of the stator (10) is higher than that of the rotor (20) and decreases the current ratio in a case in which the temperature of the stator (10) is lower than that of the rotor.

11. The driving motor according to claim 9 or 10, wherein the motor control unit (200, 230) determines the current ratio to be changed based on a plurality of combinations of field current and armature current having the same command torque.

12. The driving motor according to claim 9, wherein the motor control unit (200, 230) controls the current ratio to be changed based on a plurality of combinations of field current and armature current with respect to the same command torque.

13. The driving motor according to any one of claims 1 to 12, wherein the motor control unit (200, 230)
inputs field current and armature current based on temperature in order to reduce the difference between the temperature of the stator (10) and the temperature of the rotor (20) in a case in which the difference between the temperature of the stator and the temperature of the rotor is out of the other predetermined deviation and
inputs the field current and the armature current based on maximum torque in a case in which the difference between the temperature of the stator and the temperature of the rotor is within the other predetermined deviation.

14. A control method of a driving motor for an electric vehicle, the driving motor (1) comprising a rotor (20) having a field coil (22) wound thereon, and a stator (10) having an armature coil (12) wound thereon, **characterized in that** the method comprises:

determining by a motor control unit (200, 230) a temperature of the rotor (20) and a temperature of the stator (10);
determining by the motor control unit (200, 230), which one of the temperature of the rotor and the temperature of the stator has a higher temperature than the other; and
performing a temperature based control, by the motor control unit (200, 230), of reducing a current value input to the one having higher temperature than the other,
determining, by the motor control unit (200, 230), a temperature difference between a temperature of the stator (10) and a temperature of the rotor (20);
determining, by the motor control unit (200, 230), a first difference between the temperature of the stator (10) and a limit temperature of the motor, and a second temperature difference between the temperature of the rotor (20) and the limit temperature of the motor; and
performing, by the motor control unit (200, 230), a maximum torque based control, instead of the temperature

14

based control, of inputting field current (If) and armature current (Ia) to the respective rotor (20) and stator (10) based on a maximum torque value and a maximum field current value for the motor, i) when both the first difference and the second difference are not within a predetermined deviation, or ii) when a difference between the temperature of the stator (10) and the temperature of the rotor (20) is within another predetermined deviation.

15. The control method according to claim 14, wherein control is performed to decrease the field current value (If) and to increase the armature current value (Ia) in a case in which the field temperature is high and to increase the field current value and to decrease the armature current value in a case in which the field temperature is low.

16. The control method according to claim 14, further comprising:
if the motor control unit (200, 230) determines that the difference between the temperature of the stator (10) and the temperature of the rotor (20) is not within the other predetermined deviation, controlling by the motor control unit at least one of the temperature of the stator or the temperature of the rotor such that the difference between the temperature of the stator (10) and the temperature of the rotor (20) is within the other predetermined deviation.

17. The control method according to claim 14, further comprising allowing, by the motor control unit, one of the stator (10) or the rotor (20) corresponding to one of the first difference or the second difference that is not within the predetermined deviation to approach a predetermined motor limit temperature.

**Patentansprüche**

1. Antriebsmotor für Elektrofahrzeuge, der aufweist:

    einen Rotor (20), der eine Feldspule (22) darum gewickelt hat; und einen Stator (10), der eine Ankerspule (12) darum gewickelt hat und eine vorbestimmte Motorgrenztemperatur hat,
    wobei der Antriebsmotor (1) eine Motorsteuereinheit (200, 230) aufweist, die eingerichtet ist, eine temperaturbasierte Steuerung durchzuführen, um einen Stromwert zu verringern, der entweder in den Stator (10) oder den Rotor (20) eingegeben wird, der eine höhere Temperatur als der andere hat, und den verringerten Stromwert einzugeben,
    **dadurch gekennzeichnet, dass** die Motorsteuereinheit (200, 230) eingerichtet ist,
    eine erste Differenz zwischen einer Temperatur des Stators (10) und einer Grenztemperatur des Motors und eine zweite Differenz zwischen einer Temperatur des Rotors (20) und der Grenztemperatur des Motors zu bestimmen, und
    wobei die Motorsteuereinheit (200, 230) eingerichtet ist, eine auf dem maximalen Drehmoment basierte Steuerung anstelle der temperaturbasierten Steuerung des Eingebens von einem Feldstrom (If) und Ankerstrom (Ia) an den jeweiligen Rotor (20) und Stator (10) basierend auf einem maximalen Drehmomentwert und einem maximalen Feldstromwert für den Motor durchzuführen, i) wenn beide von der ersten Differenz und der zweiten Differenz nicht innerhalb einer vorbestimmten Abweichung liegen, oder ii) wenn eine Differenz zwischen der Temperatur des Stators (10) und der Temperatur des Rotors (20) innerhalb einer anderen vorbestimmten Abweichung liegt.

2. Antriebsmotor nach Anspruch 1, wobei
in einem Fall, in dem eine Antriebsbedingung des Antriebsmotors (1) ein Solldrehmoment hat, das eine Zunahmerate hat, die höher als ein vorbestimmter Wert ist, die Motorsteuereinheit (200, 230) einen Ankerstromwert (1a) verringert und einen Feldstromwert (If) erhöht, um eine Zeit zu verzögern, die benötigt wird, bis eine Temperatur des Stators eine vorbestimmte Motorgrenztemperatur erreicht.

3. Antriebsmotor nach Anspruch 1, wobei in einem Fall, in dem eine Antriebsbedingung des Antriebsmotors ein Solldrehmoment hat, das eine Zunahmerate hat, die unter einem vorbestimmten Wert liegt, die Motorsteuereinheit (200, 230) einen Ankerstromwert (Ia) erhöht und einen Feldstromwert (If) verringert, um eine Zeit zu verzögern, die für eine Temperatur des Rotors benötigt wird, um eine vorbestimmte Motorgrenztemperatur zu erreichen.

4. Antriebsmotor nach Anspruch 1, wobei die Motorsteuereinheit die Differenz zwischen der Temperatur des Stators und der Temperatur des Rotors steuert, um innerhalb eines vorbestimmten Bereichs zu liegen, und die Temperatur entweder des Stators (10) oder des Rotors (20) steuert, um sich der Motorgrenztemperatur anzunähern.

5. Antriebsmotor nach Anspruch 4, wobei wenn eine von der ersten Differenz oder der zweiten Differenz innerhalb einer vorbestimmten Abweichung liegt, die Steuereinheit (200, 230) dem Stator (10) oder dem Rotor (20) entsprechend einer von der ersten Differenz oder der zweiten Differenz, die nicht innerhalb der vorbestimmten Abweichung liegt, ermöglicht, sich einer vorbestimmten Motorgrenztemperatur anzunähern.

6. Antriebsmotor nach einem der Ansprüche 1 bis 5, wobei die temperaturbasierte Steuerung in einem Fall durchgeführt wird, in dem die Temperatur des Stators (10) oder die Temperatur des Rotors (20) in der bestimmten Abweichung bezüglich der Motorgrenztemperatur liegt.

7. Antriebsmotor nach einem der Ansprüche 1 bis 6, wobei wenn die Motorsteuereinheit bestimmt, dass die Differenz zwischen der Temperatur des Stators (10) und der Temperatur des Rotors (20) nicht innerhalb der anderen vorbestimmten Abweichung liegt, die Steuereinheit wenigstens eines von der Temperatur des Stators oder der Temperatur des Rotors steuert, sodass die Differenz zwischen der Temperatur des Stators und der Temperatur des Rotors innerhalb der anderen vorbestimmten Abweichung liegt.

8. Antriebsmotor nach einem der Ansprüche 1 bis 6, wobei in einem Fall, in dem die Differenz zwischen der Temperatur des Stators (10) und der Temperatur des Rotors (20) außerhalb der anderen vorbestimmten Abweichung liegt, die Motorsteuereinheit (200, 230) die temperaturbasierte Steuerung durchführt, um eine Differenz zu verringern, um einen Feldstromwert und einen Ankerstromwert basierend auf der Temperatur festzulegen und den festgelegten Feldstromwert und den festgelegten Ankerstromwert einzugeben.

9. Antriebsmotor nach einem der Ansprüche 1 bis 8, wobei die Motorsteuereinheit (200, 230) ein Verhältnis eines Ankerstromwerts zu einem Feldstromwert (ein Stromverhältnis (1a/1f)) bezüglich des Solldrehmoments basierend auf der Temperatur des Stators (10) und der Temperatur des Rotors (20) ändert, um den Feldstromwert und den Ankerstromwert einzugeben.

10. Antriebsmotor nach Anspruch 9, wobei die Motorsteuereinheit (200, 230) das Stromverhältnis (1a/1f) in einem Fall erhöht, in dem die Temperatur des Stators (10) höher als die des Rotors (20) ist, und das Stromverhältnis in einem Fall verringert, in dem die Temperatur des Stators (10) niedriger als die des Rotors ist.

11. Antriebsmotor nach Anspruch 9 oder 10, wobei die Motorsteuereinheit (200, 230) basierend auf einer Vielzahl von Kombinationen des Feldstroms und des Ankerstroms, die das gleiche Solldrehmoment haben, das zu ändernde Stromverhältnis bestimmt.

12. Antriebsmotor nach Anspruch 9, wobei die Motorsteuereinheit (200, 230) basierend auf einer Vielzahl von Kombinationen des Feldstroms und des Ankerstroms bezüglich des gleichen Solldrehmoments das zu ändernde Stromverhältnis steuert.

13. Antriebsmotor nach einem der Ansprüche 1 bis 12, wobei die Motorsteuereinheit (200, 230) den Feldstrom und den Ankerstrom basierend auf der Temperatur eingibt, um die Differenz zwischen der Temperatur des Stators (10) und der Temperatur des Rotors (20) in einem Fall zu verringern, in dem die Differenz zwischen der Temperatur des Stators und der Temperatur des Rotors außerhalb der anderen vorbestimmten Abweichung liegt und
den Feldstrom und den Ankerstrom basierend auf dem maximalen Drehmoment in einem Fall eingibt, in dem die Differenz zwischen der Temperatur des Stators und der Temperatur des Motors innerhalb der anderen vorbestimmten Abweichung liegt.

14. Steuerverfahren eines Antriebsmotors für ein Elektrofahrzeug, wobei der Antriebsmotor (1) einen Rotor (20) aufweist, der eine Feldspule (22) darum gewickelt hat, und einen Stator (10), der eine Ankerspule (12) darum gewickelt hat, **dadurch gekennzeichnet, dass** das Verfahren aufweist:

Bestimmen durch eine Motorsteuereinheit (200, 230) einer Temperatur des Rotors (20) und einer Temperatur des Stators (10);
Bestimmen durch die Motorsteuereinheit (200, 230), welche von der Temperatur des Rotors und der Temperatur des Stators eine höhere Temperatur als die andere hat; und
Durchführen, durch die Motorsteuereinheit (200, 230), einer temperaturbasierten Steuerung der Verringerung eines Stromwerts, der an den einen eingegeben wird, der eine höhere Temperatur als der andere hat,
Bestimmen durch eine Motorsteuereinheit (200, 230) einer Temperaturdifferenz zwischen einer Temperatur des Stators (10) und einer Temperatur des Rotors (20);
Bestimmen durch die Motorsteuereinheit (200, 230) einer ersten Differenz zwischen der Temperatur des Stators

16

(10) und einer Grenztemperatur des Motors, und einer zweiten Temperaturdifferenz zwischen der Temperatur des Rotors (20) und der Grenztemperatur des Motors; und

Durchführen durch die Motorsteuereinheit (200, 230) einer maximalen drehmomentbasierten Steuerung anstelle der temperaturbasierten Steuerung des Eingebens von dem Feldstrom (If) und dem Ankerstrom (Ia) an den jeweiligen Rotor (20) und Stator (10) basierend auf einem maximalen Drehmomentwert und einem maximalen Feldstromwert für den Motor, i) wenn beide von der ersten Differenz und der zweiten Differenz nicht innerhalb einer vorbestimmten Abweichung liegen, oder ii) wenn eine Differenz zwischen der Temperatur des Stators (10) und der Temperatur des Rotors (20) innerhalb einer anderen vorbestimmten Abweichung liegt.

15. Steuerverfahren nach Anspruch 14, wobei die Steuerung durchgeführt wird, um den Feldstromwert (If) zu verringern und den Ankerstromwert (Ia) in einem Fall zu erhöhen, in dem die Feldtemperatur hoch ist und um in einem Fall, in dem die Feldtemperatur niedrig ist, den Feldstromwert zu erhöhen und den Ankerstromwert zu verringern.

16. Steuerverfahren nach Anspruch 14, das weiterhin aufweist:
wenn die Motorsteuereinheit (200, 230) bestimmt, dass die Differenz zwischen der Temperatur des Stators (10) und der Temperatur des Rotors (20) nicht innerhalb der anderen vorbestimmten Abweichung liegt, Steuern durch die Motorsteuereinheit von wenigstens einer von der Temperatur des Stators oder der Temperatur des Rotors, sodass die Differenz zwischen der Temperatur des Stators (10) und der Temperatur des Rotors (20) innerhalb der anderen vorbestimmten Abweichung liegt.

17. Steuerverfahren nach Anspruch 14, das weiterhin aufweist Ermöglichen durch die Motorsteuereinheit, dass der Stator (10) oder der Rotor (20) entsprechend einer von der ersten Differenz oder der zweiten Differenz, die nicht innerhalb der vorbestimmten Abweichung liegt, sich einer vorbestimmten Motorgrenztemperatur annähert.

**Revendications**

1. Moteur d'entraînement pour véhicules électriques, comprenant : un rotor (20) sur lequel est enroulé une bobine d'excitation (22) ; et un stator (10) sur lequel est enroulé une bobine d'induit (12), et présentant une température limite de moteur prédéterminée ;
dans lequel le moteur d'entraînement (1) comprend une unité de commande de moteur (200, 230) configurée pour effectuer un contrôle basé sur la température afin de réduire une valeur de courant appliquée en entrée d'un élément choisi parmi le stator (10) et le rotor (20), qui présente une température plus élevée que l'autre, et à appliquer en entrée la valeur de courant réduite ;
**caractérisé en ce que** l'unité de commande de moteur (200, 230) est configurée de manière à déterminer une première différence entre une température du stator (10) et une température limite du moteur, et une seconde différence entre une température du rotor (20) et la température limite du moteur ; et
dans lequel l'unité de commande de moteur (200, 230) est configurée pour effectuer un contrôle basé sur un couple maximum, au lieu du contrôle basé sur la température, consistant à appliquer en entrée un courant d'excitation (If) et un courant d'induit (Ia) respectivement dans le rotor (20) et le stator (10), sur la base d'une valeur de couple maximale et d'une valeur de courant d'excitation maximale pour le moteur, i) lorsque la première différence et la seconde différence ne se situent pas toutes deux dans un écart prédéterminé, ou ii) lorsqu'une différence entre la température du stator (10) et la température du rotor (20) se situe dans un autre écart prédéterminé.

2. Moteur d'entraînement selon la revendication 1, dans lequel, dans un cas où une condition d'entraînement du moteur d'entraînement (1) présente un couple de commande dont un taux d'augmentation est supérieur à une valeur prédéterminée, l'unité de commande de moteur (200, 230) diminue une valeur de courant d'induit (Ia) et augmente une valeur de courant d'excitation (If) pour retarder le temps pris pour qu'une température du stator atteigne une température limite de moteur prédéterminée.

3. Moteur d'entraînement selon la revendication 1, dans lequel, dans un cas où une condition d'entraînement du moteur d'entraînement présente un couple de commande présentant un taux d'augmentation qui est inférieur à une valeur prédéterminée, l'unité de commande de moteur (200, 230) augmente une valeur de courant d'induit (Ia) et diminue une valeur de courant d'excitation (If) pour retarder le temps pris pour qu'une température du rotor atteigne une température limite de moteur prédéterminée.

4. Moteur d'entraînement selon la revendication 1, dans lequel l'unité de commande de moteur commande la différence entre la température du stator et la température du rotor afin qu'elle se situe dans une plage prédéterminée, et commande la température d'un élément sélectionné parmi le stator (10) et le rotor (20) afin qu'elle s'approche de la température limite de moteur.

5. Moteur d'entraînement selon la revendication 4, dans lequel, si l'une parmi la première différence ou la seconde différence se situe dans l'écart prédéterminé, l'unité de commande (200, 230) permet à un élément parmi le stator (10) et le rotor (20), correspondant à l'une parmi la première différence et la seconde différence qui ne se situe pas dans l'écart prédéterminé, de s'approcher d'une température limite de moteur prédéterminée.

6. Moteur d'entraînement selon l'une quelconque des revendications 1 à 5, dans lequel le contrôle basé sur la température est effectué dans un cas où la température du stator (10) ou la température du rotor (20) se situe dans l'écart prédéterminé par rapport à la température limite de moteur.

7. Moteur d'entraînement selon l'une quelconque des revendications 1 à 6, dans lequel si l'unité de commande de moteur détermine que la différence entre la température du stator (10) et la température du rotor (20) ne se situe pas dans l'autre écart prédéterminé, l'unité de commande commande au moins l'une parmi la température du stator et la température du rotor de sorte que la différence entre la température du stator et la température du rotor se situe dans l'autre écart prédéterminé.

8. Moteur d'entraînement selon l'une quelconque des revendications 1 à 6, dans lequel, dans un cas où la différence entre la température du stator (10) et la température du rotor (20) se situe en dehors de l'autre écart prédéterminé, l'unité de commande de moteur (200, 230) effectue, afin de réduire la différence, le contrôle basé sur la température, afin de définir une valeur de courant d'excitation et une valeur de courant d'induit sur la base de la température, et d'appliquer en entrée la valeur de courant d'excitation définie et la valeur de courant d'induit définie.

9. Moteur d'entraînement selon l'une quelconque des revendications 1 à 8, dans lequel l'unité de commande de moteur (200, 230) modifie un rapport entre une valeur de courant d'induit et une valeur de courant d'excitation (un rapport de courant (1a/1f)) par rapport au couple de commande, sur la base de la température du stator (10) et de la température du rotor (20), pour appliquer en entrée la valeur de courant d'excitation et la valeur de courant d'induit.

10. Moteur d'entraînement selon la revendication 9, dans lequel l'unité de commande de moteur (200, 230) augmente le rapport de courant (1a/1f) dans un cas où la température du stator (10) est supérieure à celle du rotor (20) et diminue le rapport de courant dans un cas où la température du stator (10) est inférieure à celle du rotor.

11. Moteur d'entraînement selon la revendication 9 ou 10, dans lequel l'unité de commande de moteur (200, 230) détermine le rapport de courant à modifier sur la base d'une pluralité de combinaisons de courant d'excitation et de courant d'induit présentant le même couple de commande.

12. Moteur d'entraînement selon la revendication 9, dans lequel l'unité de commande de moteur (200, 230) contrôle le rapport de courant à modifier sur la base d'une pluralité de combinaisons de courant d'excitation et de courant d'induit par rapport au même couple de commande.

13. Moteur d'entraînement selon l'une quelconque des revendications 1 à 12, dans lequel l'unité de commande de moteur (200, 230)
applique en entrée un courant d'excitation et un courant d'induit sur la base de la température, afin de réduire la différence entre la température du stator (10) et la température du rotor (20), dans un cas où la différence entre la température du stator et la température du rotor se situe en dehors de l'autre écart prédéterminé ; et
applique en entrée le courant d'excitation et le courant d'induit sur la base du couple maximum, dans un cas où la différence entre la température du stator et la température du rotor se situe dans l'autre écart prédéterminé.

14. Procédé de commande d'un moteur d'entraînement pour un véhicule électrique, le moteur d'entraînement (1) comprenant un rotor (20) sur lequel est enroulé une bobine d'excitation (22), et un stator (10) sur lequel est enroulé une bobine d'induit (12),
**caractérisé en ce que** le procédé comprend les étapes ci-dessous consistant à :

déterminer, par le biais d'une unité de commande de moteur (200, 230), une température du rotor (20) et une température du stator (10) ;
déterminer, par le biais de l'unité de commande de moteur (200, 230), quelle température, parmi la température du rotor et la température du stator, est supérieure à l'autre ; et

effectuer un contrôle basé sur la température, par le biais de l'unité de commande de moteur (200, 230), consistant à réduire une valeur de courant appliquée en entrée à celui ayant la température qui est supérieure à l'autre ;

déterminer, par le biais de l'unité de commande de moteur (200, 230), une différence de température entre une température du stator (10) et une température du rotor (20) ;

déterminer, par le biais de l'unité de commande de moteur (200, 230), une première différence entre la température du stator (10) et une température limite du moteur, et une seconde différence de température entre la température du rotor (20) et la température limite de moteur ; et

effectuer, par le biais de l'unité de commande de moteur (200, 230), un contrôle basé sur le couple maximum, au lieu du contrôle basé sur la température, consistant à appliquer en entrée un courant d'excitation (If) et un courant d'induit (Ia) respectivement au rotor (20) et au stator (10), sur la base d'une valeur de couple maximale et d'une valeur de courant d'excitation maximale pour le moteur, i) lorsque la première différence et la seconde différence ne se situent pas toutes deux dans un écart prédéterminé, ou ii) lorsqu'une différence entre la température du stator (10) et la température du rotor (20) se situe dans un autre écart prédéterminé.

15. Procédé de commande selon la revendication 14, dans laquelle la commande est effectuée pour diminuer la valeur de courant d'excitation (If) et augmenter la valeur de courant d'induit (Ia) dans un cas où la température d'excitation est élevée, et pour augmenter la valeur de courant d'excitation et diminuer la valeur de courant d'induit dans un cas où la température d'excitation est faible.

16. Procédé de commande selon la revendication 14, comprenant en outre l'étape ci-dessous consistant à :
si l'unité de commande de moteur (200, 230) détermine que la différence entre la température du stator (10) et la température du rotor (20) ne se situe pas dans l'autre écart prédéterminé, commander, par le biais de l'unité de commande de moteur, au moins l'une parmi la température du stator et la température du rotor, de sorte que la différence entre la température du stator (10) et la température du rotor (20) se situe dans l'autre écart prédéterminé.

17. Procédé de commande selon la revendication 14, comprenant en outre l'étape consistant à permettre, par le biais de l'unité de commande de moteur, à l'un parmi le stator (10) et le rotor (20), correspondant à l'une parmi la première différence et la seconde différence qui ne se situe pas dans l'écart prédéterminé, de s'approcher d'une température limite de moteur prédéterminée.

# FIG. 1

# FIG. 2

INPUT ACCELERATOR PEDAL PRESSING ANGLE — S1

CALCULATE TORQUE — S2

S3

CALCULATE Ia AND If (MAXIMUM TORQUE BASED CONTROL) — S4

INPUT CALCULATED Ia AND If TO MOTOR — S5

S7

DRIVE MOTOR — S6

# FIG. 3

EP 2 728 740 B1

# FIG. 4

# FIG. 5

INPUT ACCELERATOR PEDAL PRESSING ANGLE ⎯ S100

CALCULATE TORQUE ⎯ S110

$|Ts - Tr| > \triangle T_d$ [3)] ⎯ S120

N

Y

CALCULATE Ia AND If (MAXIMUM TORQUE BASED CONTROL) ⎯ S170

CALCULATE Ia AND If (TEMPERATURE BASED CONTROL) ⎯ S130

계산된 Ia, If 모터 입력 ⎯ S180

INPUT CALCULATED Ia AND If TO MOTOR ⎯ S140

S160

DRIVE MOTOR ⎯ S150

# FIG. 6

Temp.
(Torque)

(280)

170

120

(80)

0

Torque (280 Nm@4,100 rpm)

Stator Winding Temp.

Rotor Winding Temp.

40 sec.

t

# FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120242272 A1